# EUROPÄISCHE PATENTSCHRIFT

(11) **EP 3 050 204 B1**
(45) Veröffentlichungstag und Bekanntmachung des Hinweises auf die Patenterteilung: **27.06.2018**
(21) Anmeldenummer: 14793544.9
(22) Anmeldetag: 04.11.2014
(51) Int. Cl.: H02M 3/335

(54) **ANORDNUNG MIT POTENZIALGETRENNTER STROMVERSORGUNGSEINRICHTUNG**
ARRANGEMENT WITH POTENTIAL-ISOLATED CURRENT SUPPLY DEVICE
DISPOSITIF ÉQUIPÉ D'UN MOYEN D'ALIMENTATION EN COURANT À POTENTIELS SÉPARÉS

(30) Priorität: 28.11.2013 DE 102013224449
(43) Veröffentlichungstag der Anmeldung: 03.08.2016
(73) Patentinhaber: Siemens Aktiengesellschaft, 80333 München (DE)
(72) Erfinder: EUE, Wolfgang, 38162 Cremlingen (DE); OKYERE, Philip Fosu, 38108 Braunschweig (DE)
(86) Internationale Anmeldenummer: PCT/EP2014/073658
(87) Internationale Veröffentlichungsnummer: WO 2015/078665

(56) Entgegenhaltungen:
- DE-A1-102012 223 274
- US-A1- 2002 027 428
- US-A1- 2002 141 205

## Beschreibung

Die Erfindung bezieht sich auf eine Anordnung mit einer potenzialgetrennten Stromversorgungseinrichtung mit den Merkmalen gemäß dem Oberbegriff des Patentanspruchs 1, beispielsweise für den Einsatz in einer Eisenbahnanlage (siehe z.B. US2002/141205). Bekannte potenzialgetrennte Stromversorgungseinrichtungen weisen einen Eingang zum Anlegen einer Eingangsspannung, einen vom Eingang potenzialgetrennten Ausgang zur Ausgabe einer Ausgangsspannung und einen Steueranschluss auf, an dem ein Steuersignal zum Erhöhen oder Erniedrigen der Ausgangsspannung angelegt werden kann. Mit einem Rückkoppelpfad, der an den Ausgang der Stromversorgungseinrichtung angeschlossen wird, kann ein Rückmeldesignal gebildet werden, das die Spannungshöhe der Ausgangsspannung betrifft. Dieses Rückmeldesignal kann als Steuersignal zur Ansteuerung der potenzialgetrennten Stromversorgungseinrichtung verwendet werden, um eine vorgegebene Spannungshöhe der Ausgangsspannung einzustellen.

Bei vorbekannten Anordnungen der beschriebenen Art besteht das Problem, dass die potenzialgetrennte Stromversorgungseinrichtung ihre Wandleraufgabe nur noch unzulänglich erfüllen kann, wenn der Eingangsspannungsbereich am Eingang der Stromversorgungseinrichtung, der Laststrombereich und/oder der Temperaturbereich sehr groß ist. Deshalb müssen häufig Kompromisse beim Wirkungsgrad und/oder bei der Genauigkeit der Ausregelung der Ausgangsspannung eingegangen werden. Zurückzuführen ist dies auf die Potenzialtrennung, durch die die Funktionen der Stromversorgungseinrichtung zwischen der Eingangsseite und der Ausgangsseite aufgeteilt werden müssen; die Ausgangsseite könnte besser funktionieren, wenn sie mehr Informationen von der Eingangsseite hätte.

Der Erfindung liegt demgemäß die Aufgabe zugrunde, eine Anordnung anzugeben, die trotz der Potenzialtrennung eine bessere Steuer- bzw. Regelbarkeit ermöglicht als dies bei vorbekannten Anordnungen möglich ist.

Diese Aufgabe wird erfindungsgemäß durch eine Anordnung gemäß Patentanspruch 1 gelöst. Vorteilhafte Ausgestaltungen der erfindungsgemäßen Anordnung sind in Unteransprüchen angegeben.

Danach ist erfindungsgemäß vorgesehen, dass die Anordnung auf der Eingangsseite eine mit der Pulsweitenmodulationseinrichtung in Verbindung stehende, steuerbare Takterzeugungseinrichtung aufweist, die zur Erzeugung eines Taktsignals für die Pulsweitenmodulationseinrichtung dient und deren Taktsignal ein von der Eingangsseite aus steuerbares Arbeitsfrequenzspektrum aufweist, und die Anordnung auf der Ausgangsseite eine Arbeitsfrequenzauswerteeinheit aufweist, die das Arbeitsfrequenzspektrum der Pulsweitenmodulationseinrichtung anhand der Ausgangsspannung und/oder des Ausgangsstromes der Stromversorgungseinrichtung oder einer mit der Ausgangsspannung oder des Ausgangsstromes korrelierenden Größe ermittelt und in Abhängigkeit von dem jeweils ermittelten Arbeitsfrequenzspektrum mindestens eine Lastkomponente auf der Ausgangsseite zuschaltet oder mindestens eine bereits an der Ausgangsseite angeschlossene Lastkomponente abschaltet oder umschaltet.

Ein wesentlicher Vorteil der erfindungsgemäßen Anordnung ist darin zu sehen, dass bei dieser der Arbeitsbereich und/oder der Wirkungsgrad und/oder die Störungsaussendung der Stromversorgungseinrichtung durch Zuschalten, Abschalten oder Umschalten einer Lastkomponente auf der Ausgangsseite der Stromversorgungseinrichtung unter Berücksichtigung von Messgrößen und/oder Informationen, die auf der Eingangsseite der Stromversorgungseinrichtung vorliegen, optimiert werden kann.

Ein weiterer wesentlicher Vorteil der erfindungsgemäßen Anordnung besteht darin, dass zur Übertragung der Informationen von der Eingangsseite zur Ausgangsseite das Arbeitsfrequenzspektrum des Taktsignals der Pulsweitenmodulationseinrichtung herangezogen wird, so dass weder zusätzliche Komponenten für die Informationsübertragung nötig sind noch die Potenzialtrennung der Stromversorgungseinrichtung durch die Informationsübertragung beeinträchtigt wird.

Mit Blick auf eine Optimierung des Arbeitsbereichs oder des Wirkungsgrads oder der Störungsaussendung der Stromversorgungseinrichtung wird es als vorteilhaft angesehen, wenn die steuerbare Takterzeugungseinrichtung derart ausgestaltet ist, dass sie das Arbeitsfrequenzspektrum in Abhängigkeit von zumindest einer den Arbeitsbereich und/oder den Wirkungsgrad und/oder die zu erwartende Störungsaussendung der Stromversorgungseinrichtung charakterisierenden Messgröße erzeugt, und die Arbeitsfrequenzauswerteeinheit derart ausgestaltet ist, dass sie die Messgröße anhand des Arbeitsfrequenzspektrums auf der Ausgangsseite ermittelt und den Arbeitsbereich verbessert und/oder den Wirkungsgrad erhöht und/oder die Störungsaussendung verringert, indem sie in Abhängigkeit von der Messgröße die mindestens eine Lastkomponente zuschaltet oder die mindestens eine bereits angeschlossene Lastkomponente abschaltet oder umschaltet.

Vorzugsweise ist die zumindest eine den Arbeitsbereich und/oder den Wirkungsgrad und/oder die zu erwartende Störungsaussendung der Stromversorgungseinrichtung charakterisierende Messgröße eine die Eingangsspannung auf der Eingangsseite angebende Messgröße, eine den Eingangsstrom auf der Eingangsseite angebende Messgröße oder eine die Temperatur auf der Eingangsseite angebende Messgröße.

Bezüglich der Arbeitsfrequenzauswerteeinheit wird es als vorteilhaft angesehen, wenn diese derart ausgestaltet ist, dass sie eine Wirkleistung verbrauchende Lastkomponente zuschaltet, wenn die Messgröße eine einen vorgegebenen Minimalwert unterschreitende Leistungsaufnahme der Stromversorgungseinrichtung anzeigt. Die Lastkomponente wird bevorzugt wieder abgeschaltet, wenn die Messgröße eine ausreichend hohe oder zu hohe Leistungsaufnahme anzeigt.

Vorzugsweise wird als Lastkomponente eine Heizung zu- oder abgeschaltet.

Alternativ oder zusätzlich kann als Lastkomponente ein Energiespeicher zur Energiezwischenspeicherung zu- oder abgeschaltet werden. Eine Energiezwischenspeicherung wird vorzugsweise in Zeitabschnitten durchgeführt, in denen die Auslastung der Stromversorgungseinrichtung zu klein ist.

Weist die Anordnung zur Gleichrichtung einen umschaltbaren Synchrongleichrichter auf, so wird es als vorteilhaft angesehen, wenn dieser als Lastkomponente behandelt wird und je nach den jeweiligen Betriebsverhältnissen der Anordnung der jeweils optimale Betrieb des Synchrongleichrichters gewählt wird, indem im Falle einer Änderung der Betriebsverhältnisse der Synchrongleichrichter von seinem Synchrongleichrichterbetrieb in seinen passiven Diodenbetrieb umgeschaltet oder umgekehrt von seinem passiven Diodenbetrieb in den Synchrongleichrichterbetrieb umgeschaltet wird.

Alternativ oder zusätzlich kann als Lastkomponente eine Filtereinrichtung zugeschaltet, abgeschaltet oder umgeschaltet werden, je nach dem jeweiligen Betriebszustand der Anordnung mit Blick auf einen optimalen Arbeitsbereich und/oder Wirkungsgrad und/oder optimierter Störungsaussendung der Stromversorgungseinrichtung.

Bezüglich der Ausgestaltung der steuerbaren Takterzeugungseinrichtung wird es als vorteilhaft angesehen, wenn diese aufweist: zumindest einen Steuereingang zur Eingabe mindestens einer von der Eingangsseite auf die Ausgangsseite zu übertragenden Information, eine Umsetzeinrichtung zur Umsetzung der eingangsseitig anliegenden Information oder Informationen in ein korrespondierendes Arbeitsfrequenzspektrum für das Taktsignal und einen Taktgenerator zur Erzeugung eines Taktsignals, das das von der Umsetzeinrichtung ermittelte Arbeitsfrequenzspektrum aufweist.

Die Arbeitsfrequenzauswerteeinheit weist vorzugsweise auf: eine Dekodiereinrichtung, die das Arbeitsfrequenzspektrum der Pulsweitenmodulationseinrichtung auswertet und die zumindest eine den Arbeitsbereich und/oder den Wirkungsgrad und/oder die zu erwartende Störungsaussendung der Stromversorgungseinrichtung charakterisierende Messgröße und/oder die Information ermittelt, und eine mit der Dekodiereinrichtung in Verbindung stehende Steuereinrichtung, die in Abhängigkeit von der von der Dekodiereinrichtung ermittelten Messgröße und/oder der Information die mindestens eine Lastkomponente zuschaltet oder die mindestens eine bereits angeschlossene Lastkomponente abschaltet oder umschaltet.

Mit Blick auf eine effiziente Regelung der Ausgangsspannung der Stromversorgungseinrichtung wird es als vorteilhaft angesehen, wenn die Stromversorgungseinrichtung einen Rückkoppelpfad aufweist, der ein Rückkoppelsignal von der Ausgangsseite auf die Eingangsseite und zur Pulsweitenmodulationseinrichtung übermittelt, die Pulsweitenmodulationseinrichtung derart ausgestaltet ist, dass sie im Rahmen der Pulsweitenregelung die jeweilige Pulsweite anhand des Rückkoppelsignals regelt und die Lastkomponente von dem Rückkoppelpfad unabhängig ist und eine von dem Rückkoppelpfad separate und den Rückkoppelpfad nicht beeinflussende Komponente bildet.

Vorzugsweise ist die Lastkomponente mit der Ausgangsspannung der potenzialgetrennten Stromversorgungseinrichtung beaufschlagt.

Da, wie oben ausgeführt, durch Zuschalten, Abschalten oder Umschalten der Lastkomponente Einfluss auf den Betriebszustand der Stromversorgungseinrichtung genommen werden kann, wird es als vorteilhaft angesehen, wenn die Pulsweitenmodulationseinrichtung bei einer Änderung des Arbeitsfrequenzspektrums das daraufhin erfolgende Zuschalten, Abschalten oder Umschalten der Lastkomponente derart berücksichtigt, dass sie die Pulsweitenregelung bereits vor der Änderung des Rückkoppelsignals in der zu erwartenden Änderungsrichtung gegensteuert.

Die Erfindung bezieht sich darüber hinaus auf ein Verfahren zum Betreiben einer potenzialgetrennten Stromversorgungseinrichtung, wobei die Ausgangsspannung der potenzialgetrennten Stromversorgungseinrichtung mittels einer Pulsweitenmodulationseinrichtung durch Pulsweitenmodulation geregelt wird.

Erfindungsgemäß ist bezüglich eines solchen Verfahrens vorgesehen, dass mit einer steuerbaren Takterzeugungseinrichtung für die Pulsweitenmodulationseinrichtung ein Taktsignal erzeugt wird, das ein von der Eingangsseite der Stromversorgungseinrichtung aus steuerbares Arbeitsfrequenzspektrum aufweist, und auf der Ausgangsseite der Stromversorgungseinrichtung das Arbeitsfrequenzspektrum der Pulsweitenmodulationseinrichtung anhand der Ausgangsspannung und/oder des Ausgangsstromes der Stromversorgungseinrichtung oder einer mit der Ausgangsspannung oder des Ausgangsstromes korrelierenden Größe ermittelt und in Abhängigkeit von dem jeweils ermittelten Arbeitsfrequenzspektrum mindestens eine Lastkomponente auf der Ausgangsseite zugeschaltet oder mindestens eine bereits an der Ausgangsseite angeschlossene Lastkomponente abgeschaltet oder umgeschaltet wird.

Bezüglich der Vorteile des erfindungsgemäßen Verfahrens sei auf die obigen Ausführungen im Zusammenhang mit der erfindungsgemäßen Anordnung verwiesen.

Die Erfindung wird nachfolgend anhand von Ausführungsbeispielen näher erläutert; dabei zeigen beispielhaft
- Figur 1: ein Ausführungsbeispiel für eine erfindungsgemäße Anordnung, bei der auf der Ausgangsseite einer potenzialgetrennten Stromversorgungseinrichtung eine wirkleistungsverbrauchende Lastkomponente angeschlossen ist, die in Abhängigkeit von dem jeweiligen Arbeitsfrequenzspektrum der Stromversorgungseinrichtung ein- oder ausgeschaltet wird,
- Figur 2: ein Ausführungsbeispiel für eine erfindungsgemäße Anordnung, bei der auf der Ausgangsseite einer potenzialgetrennten Stromversorgungseinrichtung ein zu- und abschaltbarer Energiespeicher angeschlossen ist,
- Figur 3: ein Ausführungsbeispiel für eine erfindungsgemäße Anordnung, bei der auf der Ausgangsseite einer potenzialgetrennten Stromversorgungseinrichtung eine zu- und abschaltbare Filtereinrichtung angeschlossen ist, und
- Figur 4: ein Ausführungsbeispiel für eine erfindungsgemäße Anordnung, bei der auf der Ausgangsseite einer potenzialgetrennten Stromversorgungseinrichtung ein steuerbarer Synchrongleichrichter angeschlossen ist.

In den Figuren werden der Übersicht halber für identische oder vergleichbare Komponenten stets dieselben Bezugszeichen verwendet.

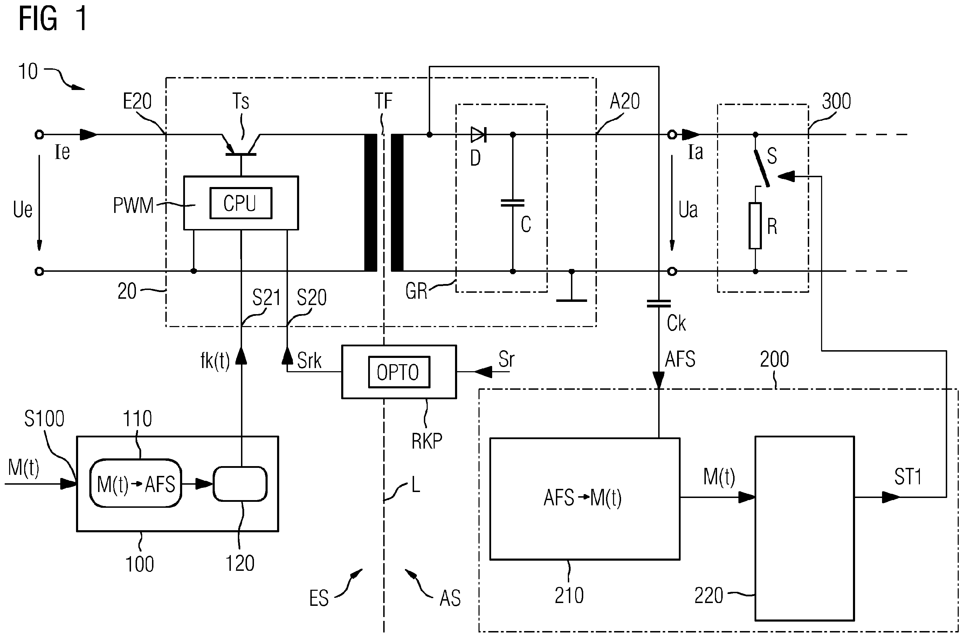

In der Figur 1 erkennt man eine Anordnung 10 mit einer potenzialgetrennten Stromversorgungseinrichtung 20, an deren Eingang E20 eine Eingangsspannung Ue angelegt werden kann. Die Stromversorgungseinrichtung 20 weist eingangsseitig bzw. auf der Eingangsseite ES einen Schalttransistor Ts auf, der von einer Pulsweitenmodulationseinrichtung PWM angesteuert wird. Dem Schalttransistor Ts nachgeordnet ist ein Transformator TF, der eine Spannungsumsetzung und eine Potenzialtrennung zwischen dem Eingang E20 der Stromversorgungseinrichtung 20 und deren Ausgang A20 hervorruft. Auf der Ausgangsseite des Transformators TF ist eine Gleichrichteranordnung GR angeschlossen, die eine Diode D sowie einen Kondensator C umfasst. Der Kondensator C liegt zu dem Ausgang A20 der Stromversorgungseinrichtung 20 parallel, so dass die an dem Kondensator C abfallende Spannung die Ausgangsspannung Ua der Stromversorgungseinrichtung 20 bildet.

Die Ausgangsseite AS der Stromversorgungseinrichtung 20 und die Eingangsseite ES der Stromversorgungseinrichtung 20 sind in der Figur 1 durch eine gepunktete Linie L voneinander getrennt.

Zur Steuerung der Pulsweitenmodulationseinrichtung PWM weist die Stromversorgungseinrichtung 20 zwei Steueranschlüsse S20 und S21 auf.

An den Steueranschluss S20, der zur Rückmeldung dient und demgemäß auch Rückmeldeeingang S20 genannt werden kann, ist ein potenzialgetrennter und einen Optokoppler OPTO aufweisender Rückkoppelpfad RKP angeschlossen. Im Nachfolgenden wird beispielhaft davon ausgegangen, dass der Optokoppler OPTO mit Hilfe eines Steuersignals in Form eines Rückmeldesignals Srk, das am Rückmeldeeingang S20 in die Stromversorgungseinrichtung 20 und damit in die Pulsweitenmodulationseinrichtung PWM eingespeist wird, es der Pulsweitenmodulationseinrichtung PWM ermöglicht, die Arbeitsweise der Stromversorgungseinrichtung 20 und damit die Ausgangsspannung Ua am Ausgang A20 zu beeinflussen bzw. zu steuern oder zu regeln. Dabei wird - ebenfalls nur beispielhaft - davon ausgegangen, dass bei Anlegen eines Rückmeldesignals Srk mit einem hohen Signalpegel die Pulsweitenmodulationseinrichtung PWM den Schalttransistor Ts derart ansteuern wird, dass sich die Ausgangsspannung Ua am Ausgang A20 erhöhen wird. Im Falle eines Rückmeldesignals Srk mit einem niedrigen Signalpegel wird die Pulsweitenmodulationseinrichtung PWM mittels des Schalttransistors Ts für eine Erniedrigung der Ausgangsspannung Ua am Ausgang A20 sorgen. Die hier vorgenommene Zuordnung der Signalpegel zum Erhöhen oder Erniedrigen der Ausgangsspannung Ua ist nur beispielhaft zu verstehen; die Pulsweitenmodulationseinrichtung PWM könnte auch umgekehrt arbeiten und bei Anliegen eines Rückmeldesignals Srk mit einem niedrigen Signalpegel die Ausgangsspannung Ua erhöhen und bei Anliegen eines Rückmeldesignals Srk mit einem hohen Signalpegel die Ausgangsspannung Ua erniedrigen. Als Eingangssignal Sr für den Rückkoppelpfad RKP kann beispielsweise die Ausgangsspannung Ua auf der Ausgangsseite AS der potenzialgetrennten Stromversorgungseinrichtung 20 oder eine mit der Ausgangsspannung Ua korrelierte Größe, beispielsweise die Ausgangsspannung am Transformator TF dienen.

Die Figur 1 zeigt darüber hinaus eine steuerbare Takterzeugungseinrichtung 100, die an den Steueranschluss S21 der Stromversorgungseinrichtung 20 angeschlossen ist. Die steuerbare Takterzeugungseinrichtung 100 weist eine Umsetzeinrichtung 110 auf, die an einen Steuereingang S100 der steuerbaren Takterzeugungseinrichtung 100 angeschlossen ist. Der Umsetzeinrichtung 110 nachgeordnet ist ein Taktgenerator 120 der steuerbaren Takterzeugungseinrichtung 100.

Der Taktgenerator 120 ist ausgangsseitig an den Steueranschluss S21 der Stromversorgungseinrichtung 20 angeschlossen und beaufschlagt die Pulsweitenmodulationseinrichtung PWM mit einem Taktsignal fk(t), auf dessen Basis die Pulsweitenmodulationseinrichtung PWM den Schalttransistor Ts einschaltet.

Die Figur 1 zeigt außerdem eine auf der Ausgangsseite AS angeordnete Arbeitsfrequenzauswerteeinheit 200, die eine Dekodiereinrichtung 210 sowie eine der Dekodiereinrichtung 210 nachgeordnete Steuereinrichtung 220 umfasst. Die Dekodiereinrichtung 210 steht mit der Ausgangsseite AS der Stromversorgungseinrichtung 20 in Verbindung und ermittelt das jeweilige Arbeitsfrequenzspektrum AFS der Stromversorgungseinrichtung 20 bzw. der Pulsweitenmodulationseinrichtung PWM; hierzu kann die Dekodiereinrichtung 210 beispielsweise über einen Koppelkodensator Ck an den Ausgang des Transformators TF oder den Ausgang A20 der Stromversorgungseinrichtung 20 angeschlossen sein.

Die Steuereinrichtung 220 steht zudem mit einer zuschaltbaren bzw. abschaltbaren Lastkomponente 300 in Verbindung. Nachfolgend wird beispielhaft davon ausgegangen, dass es sich bei der Lastkomponente 300 um eine Wirkleistung verbrauchende Lastkomponente mit einem Wirkwiderstand R handelt. Der Wirkwiderstand R kann beispielsweise durch eine Heizung gebildet sein.

Die Zuschaltbarkeit bzw. Abschaltbarkeit der Lastkomponente 300 wird durch einen internen Schalter S gewährleistet, der mit der Steuereinrichtung 220 der Arbeitsfrequenzauswerteeinheit 200 in Verbindung steht und von der Steuereinrichtung 220 mittels eines Steuersignals ST1 ein- bzw. ausgeschaltet werden kann.

Die Anordnung gemäß Figur 1 lässt sich beispielsweise wie folgt betreiben:
An den Steuereingang S100 der steuerbaren Takterzeugungseinrichtung 100 wird eine den Arbeitsbereich und/oder den Wirkungsgrad der Stromversorgungseinrichtung 20 charakterisierende Messgröße M eingespeist. Bei der Messgröße M kann es sich beispielsweise um eine die Eingangsspannung Ue auf der Eingangsseite ES der Stromversorgungseinrichtung 20 angebende Messgröße, eine den Eingangsstrom Ie auf der Eingangsseite ES angebende Messgröße oder eine die Temperatur T auf der Eingangsseite ES angebende Messgröße handeln.

Die Messgröße M wird von der Umsetzeinrichtung 110 ausgewertet, die ausgangsseitig in Abhängigkeit von der Messgröße M ein Arbeitsfrequenzspektrum AFS erzeugt, mit dem die Arbeitsweise des Taktgenerators 120 beeinflusst bzw. gesteuert wird. In Abhängigkeit von dem jeweiligen Arbeitsfrequenzspektrum AFS wird der Taktgenerator 120 das jeweils passende Taktsignal fk(t) bilden, das das von der Umsetzeinrichtung 110 vorgegebene bzw. ermittelte Arbeitsfrequenzspektrum AFS aufweist.

Falls die den Arbeitsbereich und/oder den Wirkungsgrad der Stromversorgungseinrichtung 20 charakterisierende Messgröße M die Höhe des Eingangsstroms Ie auf der Eingangsseite ES angibt, so kann die Umsetzeinrichtung 110 beispielsweise das Arbeitsfrequenzspektrum AFS derart vorgeben, dass die Höhe der Arbeitsfrequenz des Taktsignals fk(t), also die Taktrate bzw. Taktfrequenz, die jeweilige Höhe des Eingangsstroms widerspiegelt. Beispielsweise kann die Umsetzeinrichtung 110 die Taktfrequenz des Taktsignals fk(t) erhöhen, wenn der Eingangsstrom Ie ansteigt und die Taktfrequenz des Taktsignals fk(t) reduzieren, wenn der Eingangsstrom Ie sinkt. Mit anderen Worten kann also die steuerbare Takterzeugungseinrichtung 100 in Abhängigkeit von dem jeweiligen Eingangsstrom Ie auf der Eingangsseite ES ein Taktsignal fk(t) erzeugen, dessen Taktfrequenz bzw. dessen Arbeitsfrequenzspektrum AFS die jeweilige Höhe des Eingangsstroms Ie anzeigt.

In entsprechender Weise kann das Arbeitsfrequenzspektrum AFS des Taktsignals fk(t) in Abhängigkeit von der Eingangsspannung Ue, der Temperatur T auf der Eingangsseite ES und/oder von anderen Messgrößen abhängig gemacht werden. Darüber hinaus ist es möglich, sonstige Informationen oder Steuerbefehle durch Veränderung bzw. Kodierung des Arbeitsfrequenzspektrums AFS von der Eingangsseite ES zur Ausgangsseite AS zu übermitteln und zur Manipulation der Arbeitsweise der Stromversorgungseinrichtung 20 heranzuziehen. Auch können durch eine Beeinflussung des Arbeitsfrequenzspektrums AFS zwei oder mehr Messgrößen oder zwei oder mehr Informationen, beispielsweise Steuerbefehle, von der Eingangsseite ES zur Ausgangsseite AS übermittelt werden, beispielsweise im Rahmen eines das Arbeitsfrequenzspektrum AFS modulierenden Frequenzmultiplexverfahrens.

Das Arbeitsfrequenzspektrum AFS bzw. das Taktsignal fk(t) beeinflusst nicht nur die Arbeitsweise der Pulsweitenmodulationseinrichtung PWM, sondern wirkt sich trotz Gleichrichtung auch auf die Ausgangsspannung Ua auf der Ausgangsseite AS der Stromversorgungseinrichtung 20 sowie auf den Ausgangsstrom Ia auf der Ausgangsseite AS aus, so dass sich das Arbeitsfrequenzspektrum AFS in der Ausgangsspannung Ua und in dem Ausgangsstrom Ia wiederfinden bzw. aus oder mit diesen beiden Größen ermitteln lässt.

Ist nun die Arbeitsfrequenzauswerteeinheit 200 bzw. deren Dekodiereinrichtung 210 mit der Ausgangsseite AS verbunden und beispielsweise mit der Ausgangsspannung Ua, dem Ausgangsstrom Ia oder einer mit der Ausgangsspannung Ua oder dem Ausgangsstrom Ia korrespondierenden Größe (z. B. der Ausgangsspannung des Transformators TF wie in Figur 1 gezeigt) beaufschlagt, so kann die Dekodiereinrichtung 210 das Arbeitsfrequenzspektrum AFS erfassen, auswerten sowie dekodieren. Mit anderen Worten kann die Dekodiereinrichtung 210 die am Steuereingang S100 in die Takterzeugungseinrichtung 100 eingespeiste Messgröße M ermitteln und diese zur Steuereinrichtung 220 übertragen. Die Steuereinrichtung 220 kann nachfolgend in Abhängigkeit von der Messgröße M - beispielsweise unter Heranziehung einer in der Steuereinrichtung 220 abgespeicherten Entscheidungstabelle - die schaltbare Lastkomponente 300 zu- oder abschalten, beispielsweise mittels eines Steuersignals ST1.

Stellt die Steuereinrichtung 220 beispielsweise fest, dass die Messgröße M einen Eingangsstrom Ie auf der Eingangsseite ES anzeigt, der zu klein ist und einer zu geringen Leistungsaufnahme der Stromversorgungseinrichtung 20 für einen effizienten Betrieb entspricht, so kann sie die Lastkomponente 300 mit dem Steuersignal ST1 zuschalten, die elektrische Belastung der Stromversorgungseinrichtung 20 erhöhen und somit den Arbeitsbereich der Stromversorgungseinrichtung 20 derart verschieben oder verändern, dass sich der Wirkungsgrad der Stromversorgungseinrichtung 20 verbessert. Mit anderen Worten kann die Arbeitsfrequenzauswerteeinheit 200 bzw. deren Steuereinrichtung 220 beispielsweise durch Auswerten der Messgröße M dafür sorgen, dass stets eine ausreichende Minimallast auf der Ausgangsseite AS an die Stromversorgungseinrichtung 20 angeschlossen ist und ein Leerlauf der Stromversorgungseinrichtung 20 vermieden wird.

In entsprechender Weise kann die Steuereinrichtung 220 die Lastkomponente 300 mittels des Steuersignals ST1 und des Schalters S abschalten, wenn die Messgröße M anzeigt, dass der Eingangsstrom Ie eine vorgegebene Größe überschreitet und die Leistungsaufnahme der Stromversorgungseinrichtung 20 zu groß ist.

Anstelle einer Messgröße M, die den Arbeitsbereich und/oder den Wirkungsgrad der Stromversorgungseinrichtung 20 charakterisiert, kann auch eine andere Information mittels der steuerbaren Takterzeugungseinrichtung 100 von der Eingangsseite ES zur Arbeitsfrequenzauswerteeinheit 200 auf die Ausgangsseite AS übertragen werden und mit dieser Information das Zu-oder Abschalten der Lastkomponente 300 erzwungen werden.

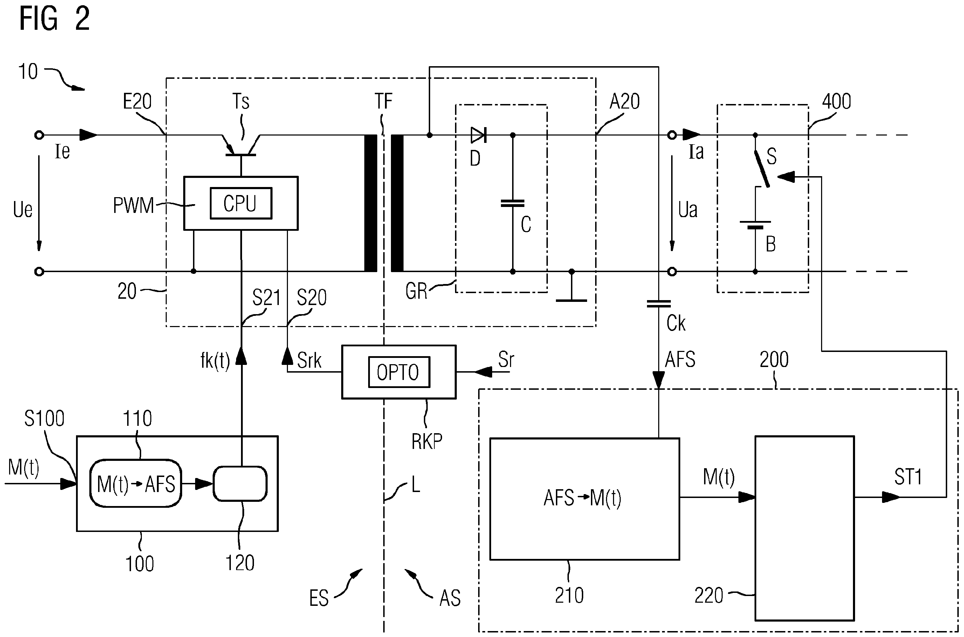

Die Figur 2 zeigt eine Anordnung 10 die der Anordnung gemäß Figur 1 im Wesentlichen entspricht und sich nur hinsichtlich der angeschlossenen Lastkomponente unterscheidet. So ist an die Ausgangsseite AS der Stromversorgungseinrichtung 20 eine Lastkomponente 400 angeschlossen, bei der es sich um einen zu- oder abschaltbaren Energiespeicher handelt. Die Lastkomponente 400 weist einen Schalter S sowie zur Energiespeicherung beispielsweise eine Batterie B (z. B. in Form eines Akkumulatorpacks) auf.

Die Lastkomponente 400 der Anordnung 10 gemäß Figur 2 ermöglicht es, in Abhängigkeit von einer am Steuereingang S100 der steuerbaren Takterzeugungseinrichtung 100 anliegenden Messgröße M, den Energiespeicher 400 zu- oder abzuschalten. Lässt sich beispielsweise anhand der Messgröße M erkennen, dass die Leistungsaufnahme bzw. die Leistungsübertragung der Stromversorgungseinrichtung 20 zu gering ist, so kann durch ein Zuschalten der Lastkomponente 400 bzw. durch ein Zuschalten der Batterie B die Leistungsaufnahme der Stromversorgungseinrichtung 20 zumindest temporär erhöht und der Wirkungsgrad bzw. der Arbeitsbereich der Stromversorgungseinrichtung 20 zumindest temporär optimiert werden. Erhöht sich im weiteren Betrieb die Leistungsaufnahme der Stromversorgungseinrichtung 20 durch eine höhere Energieabnahme auf der Ausgangsseite AS, so kann die Lastkomponente 400 wieder abgeschaltet bzw. der Schalter S geöffnet werden.

Die in der Batterie B gespeicherte Energie kann in einer späteren Phase entnommen werden, beispielsweise, wenn die Energieaufnahme auf der Ausgangsseite AS über ein vorgegebenes Maß hinaus ansteigt und die Bereitstellung der auf der Ausgangsseite AS angefragten Energie allein durch die Stromversorgungseinrichtung 20 nicht oder zumindest nicht mit einem optimalen Wirkungsgrad der Stromversorgungseinrichtung 20 möglich wäre.

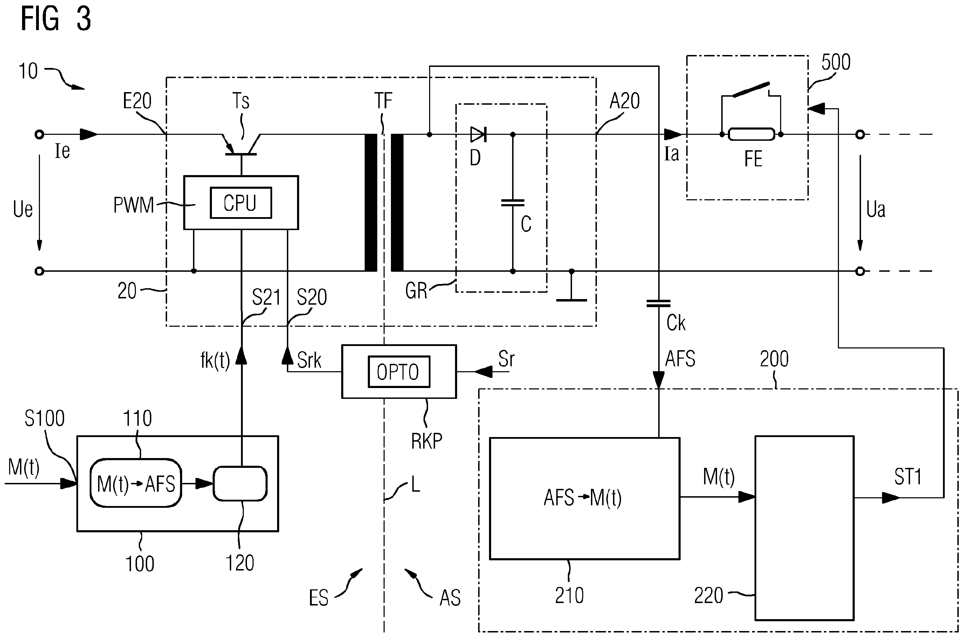

Die Figur 3 zeigt ein Ausführungsbeispiel für eine Anordnung 10, bei der auf der Ausgangsseite AS der Stromversorgungseinrichtung 20 eine zu- oder abschaltbare Filtereinrichtung 500 mit einem Filterelement FE als Lastkomponente angeschlossen ist. Die Filtereinrichtung 500 wird von der Steuereinrichtung 220 der Arbeitsfrequenzauswerteeinheit 200 zu- oder abgeschaltet, und zwar in Abhängigkeit von dem Arbeitsfrequenzspektrum AFS, das die Umsetzeinrichtung 110 in Abhängigkeit von einer am Steuereingang S100 der steuerbaren Takterzeugungseinrichtung 100 anliegenden Messgröße M erzeugt. Bezüglich des Ein- und Ausschaltens der Filtereinrichtung 500 sei auf die obigen Ausführungen im Zusammenhang mit den Figuren 1 und 2 verwiesen, die hier entsprechend gelten.

Der besondere Vorteil dieses Ausführungsbeispiels besteht darin, dass eine Optimierung des Wirkungsgrads und der zu erwartenden Störungsaussendungen erfolgen kann. Bei überbrücktem Filterelement FE sind der Wirkungsgrad, aber auch die zu erwartenden Störungsaussendungen höher. Bei wirksam geschaltetem Filterelement FE sind der Wirkungsgrad, aber auch die zu erwartenden Störungsaussendungen niedriger. Eine Anordnung nach Figur 3 kann somit mehreren Normen bezüglich elektromagnetischer Verträglichkeit und Umweltschutz entsprechen.

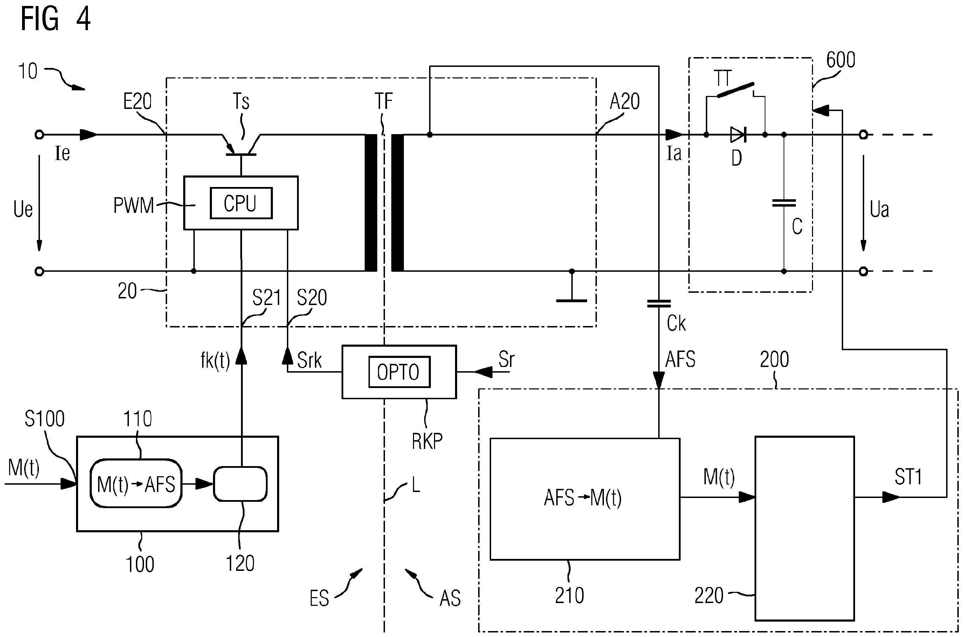

Die Figur 4 zeigt ein Ausführungsbeispiel für eine Anordnung 10, bei der die potenzialgetrennte Stromversorgungseinrichtung 20 keinen eigenen Gleichrichter aufweist. Stattdessen ist an der Ausgangsseite AS der Stromversorgungseinrichtung 20 ein externer schaltbarer Synchrongleichrichter 600 angeschlossen, der somit eine von der Arbeitsfrequenzauswerteeinheit 200 schaltbare Lastkomponente darstellt. Der Synchrongleichrichter lässt sich von der Steuereinrichtung 220 der Arbeitsfrequenzauswerteeinheit 200 in einem passiven Modus betreiben, in dem die Gleichrichtung ausschließlich über die Diode D und den Kondensator C erfolgt, sowie in einem aktiven Modus, bei dem die Gleichrichtung über ein Schaltelement, beispielsweise in Form eines Transistors TT, realisiert wird.

Das Umschalten des Synchrongleichrichters 600 von dem aktiven Modus in den passiven Modus oder umgekehrt erfolgt in Abhängigkeit von dem jeweiligen Arbeitsfrequenzspektrum AFS bzw. in Abhängigkeit von der Messgröße M, die am Steuereingang S100 der steuerbaren Takterzeugungseinrichtung 100 anliegt. Bezüglich der Arbeitsweise der Takterzeugungseinrichtung 100 sowie der Arbeitsweise der Arbeitsfrequenzauswerteeinheit 200 sei auf die obigen Ausführungen im Zusammenhang mit den Figuren 1 bis 3 verwiesen, die hier entsprechend gelten.

Bei den Ausführungsvarianten, die oben beispielhaft im Zusammenhang mit den Figuren 1 bis 4 erläutert wurden, wird es als vorteilhaft angesehen, wenn die Pulsweitenmodulationseinrichtung PWM derart ausgestaltet ist, dass sie im Falle einer Änderung des Arbeitsfrequenzspektrums AFS das sich dadurch ergebende Zuschalten, Abschalten oder Umschalten der Lastkomponente 300, 400, 500 oder 600 bei der Pulsweitenregelung bereits berücksichtigt, bevor es zu einer zu erwartenden Änderung des Rückkoppelsignals Srk kommt, indem sie die Pulsweitenregelung schon vor der zu erwartenden Änderung des Rückkoppelsignals Srk des Rückkoppelpfades RKP entgegen der zu erwartenden Änderungsrichtung gegensteuert. Um ein solches Verhalten der Pulsweitenmodulationseinrichtung PWM zu ermöglichen, ist diese vorzugsweise mit einer eigenen Steuereinrichtung, beispielsweise in Form einer Mikroprozessoreinrichtung, ausgestattet. Eine solche Mikroprozessoreinrichtung ist in den Figuren 1 bis 4 eingezeichnet und mit dem Bezugszeichen CPU markiert.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Anordnung (10) mit einer potenzialgetrennten Stromversorgungseinrichtung (20), deren Regelung der Ausgangsspannung (Ua) auf Pulsweitenmodulation beruht und die aufweist: eine Eingangsseite (ES), eine von der Eingangsseite (ES) potenzialgetrennte Ausgangsseite (AS), einen Eingang zum Anlegen einer Eingangsspannung (Ue) auf der Eingangsseite (ES), einen vom Eingang potenzialgetrennten Ausgang zur Ausgabe einer geregelten Ausgangsspannung (Ua) auf der Ausgangsseite (AS) und eine Pulsweitenmodulationseinrichtung (PWM) auf der Eingangsseite (ES) der Stromversorgungseinrichtung (20),
**dadurchgekennzeichnet**, dass
- die Anordnung (10) auf der Eingangsseite (ES) eine mit der Pulsweitenmodulationseinrichtung (PWM) in Verbindung stehende, steuerbare Takterzeugungseinrichtung (100) aufweist, die zur Erzeugung eines Taktsignals (fk(t)) für die Pulsweitenmodulationseinrichtung (PWM) dient und deren Taktsignal (fk(t)) ein von der Eingangsseite (ES) aus steuerbares Arbeitsfrequenzspektrum (AFS) aufweist, und
- die Anordnung (10) auf der Ausgangsseite (AS) eine Arbeitsfrequenzauswerteeinheit (200) aufweist, die das Arbeitsfrequenzspektrum (AFS) der Pulsweitenmodulationseinrichtung (PWM) anhand der Ausgangsspannung (Ua) und/oder des Ausgangsstromes (Ia) der Stromversorgungseinrichtung (20) oder einer mit der Ausgangsspannung (Ua) oder des Ausgangsstromes (Ia) korrelierenden Größe ermittelt und in Abhängigkeit von dem jeweils ermittelten Arbeitsfrequenzspektrum (AFS) mindestens eine Lastkomponente (300, 400, 500, 600) auf der Ausgangsseite (AS) zuschaltet oder mindestens eine bereits an der Ausgangsseite (AS) angeschlossene Lastkomponente (300, 400, 500, 600) abschaltet oder umschaltet.

2. Anordnung (10) nach Anspruch 1,
**dadurchgekennzeichnet**, dass
- die steuerbare Takterzeugungseinrichtung (100) derart ausgestaltet ist, dass sie das Arbeitsfrequenzspektrum (AFS) in Abhängigkeit von zumindest einer den Arbeitsbereich und/oder den Wirkungsgrad der Stromversorgungseinrichtung (20) charakterisierenden Messgröße (M) erzeugt und
- die Arbeitsfrequenzauswerteeinheit (200) derart ausgestaltet ist, dass sie die Messgröße (M) anhand des Arbeitsfrequenzspektrums (AFS) auf der Ausgangsseite (AS) ermittelt und den Arbeitsbereich verbessert und/oder den Wirkungsgrad erhöht, indem sie in Abhängigkeit von der Messgröße (M) die mindestens eine Lastkomponente (300, 400, 500, 600) zuschaltet oder die mindestens eine bereits angeschlossene Lastkomponente (300, 400, 500, 600) abschaltet oder umschaltet.

3. Anordnung (10) nach Anspruch 2,
**dadurchgekennzeichnet**, dass die zumindest eine den Arbeitsbereich und/oder den Wirkungsgrad der Stromversorgungseinrichtung (20) charakterisierende Messgröße (M) eine die Eingangsspannung (Ue) auf der Eingangsseite (ES) angebende Messgröße (M), eine den Eingangsstrom (Ie) auf der Eingangsseite (ES) angebende Messgröße (M)oder eine die Temperatur (T) auf der Eingangsseite (ES) angebende Messgröße (M) ist.

4. Anordnung (10) nach einem der voranstehenden Ansprüche,
**dadurchgekennzeichnet**, dass die Arbeitsfrequenzauswerteeinheit (200) derart ausgestaltet ist, dass sie eine Wirkleistung verbrauchende Lastkomponente (300, 400) zuschaltet, wenn die Messgröße (M) eine einen vorgegebenen Minimalwert unterschreitende Leistungsaufnahme der Stromversorgungseinrichtung (20) anzeigt.

5. Anordnung (10) nach Anspruch 4,
**dadurchgekennzeichnet**, dass als Lastkomponente (300) eine Heizung zu- oder abgeschaltet wird.

6. Anordnung (10) nach einem der voranstehenden Ansprüche,
**dadurch gekennzeichnet, dass** als Lastkomponente ein Energiespeicher (400) zur Energiezwischenspeicherung zu- oder abgeschaltet wird.

7. Anordnung (10) nach einem der voranstehenden Ansprüche,
**dadurch gekennzeichnet, dass** als Lastkomponente ein Synchrongleichrichter (600) umgeschaltet wird, indem dieser von seinem Synchrongleichrichterbetrieb in einen passiven Diodenbetrieb umgeschaltet oder umgekehrt von seinem passiven Diodenbetrieb in den Synchrongleichrichterbetrieb umgeschaltet wird.

8. Anordnung (10) nach einem der voranstehenden Ansprüche,
**dadurch gekennzeichnet, dass** als Lastkomponente eine Filtereinrichtung (500) zugeschaltet, abgeschaltet oder umgeschaltet wird.

9. Anordnung (10) nach einem der voranstehenden Ansprüche,
**dadurch gekennzeichnet, dass** die steuerbare Takterzeugungseinrichtung (100) aufweist:
- zumindest einen Steuereingang (S100) zur Eingabe mindestens einer von der Eingangsseite (ES) auf die Ausgangsseite (AS) zu übertragenden Information, eine Umsetzeinrichtung (110) zur Umsetzung der eingangsseitig anliegenden Information oder Informationen in ein korrespondierendes Arbeitsfrequenzspektrum (AFS) für das Taktsignal (fk(t)) und
- einen Taktgenerator (120) zur Erzeugung eines Taktsignals (fk(t)), das das von der Umsetzeinrichtung (110) ermittelte Arbeitsfrequenzspektrum (AFS) aufweist.

10. Anordnung (10) nach einem der voranstehenden Ansprüche,
**dadurch gekennzeichnet, dass** die Arbeitsfrequenzauswerteeinheit (200) aufweist:
- eine Dekodiereinrichtung (210), die das Arbeitsfrequenzspektrum (AFS) der Pulsweitenmodulationseinrichtung (PWM) auswertet und die zumindest eine den Arbeitsbereich und/oder den Wirkungsgrad der Stromversorgungseinrichtung (20) charakterisierende Messgröße (M) und/oder die Information ermittelt, und
- eine mit der Dekodiereinrichtung (210) in Verbindung stehende Steuereinrichtung (220), die in Abhängigkeit von der von der Dekodiereinrichtung (210) ermittelten Messgröße (M) und/oder der Information die mindestens eine Lastkomponente (300, 400, 500, 600) zuschaltet oder die mindestens eine bereits angeschlossene Lastkomponente (300, 400, 500, 600) abschaltet oder umschaltet.

11. Anordnung (10) nach einem der voranstehenden Ansprüche,
**dadurch gekennzeichnet, dass**
- die Anordnung (10) einen Rückkoppelpfad (RKP) aufweist, der ein Rückkoppelsignal (Srk) von der Ausgangsseite (AS) auf die Eingangsseite (ES) und zur Pulsweitenmodulationseinrichtung (PWM) übermittelt,
- die Pulsweitenmodulationseinrichtung (PWM) derart ausgestaltet ist, dass sie im Rahmen der Pulsweitenregelung die jeweilige Pulsweite anhand des Rückkoppelsignals (Srk) regelt und
- die Lastkomponente (300, 400, 500, 600) von dem Rückkoppelpfad (RKP) unabhängig ist und eine von dem Rückkoppelpfad (RKP) separate und den Rückkoppelpfad (RKP) nicht beeinflussende Komponente bildet.

12. Anordnung (10) nach einem der voranstehenden Ansprüche,
**dadurch gekennzeichnet, dass**
- die Lastkomponente (300, 400) mit der Ausgangsspannung (Ua) der potenzialgetrennten Stromversorgungseinrichtung (20) beaufschlagt ist.

13. Anordnung (10) nach einem der voranstehenden Ansprüche,
**dadurch gekennzeichnet, dass**
- nach der Lastkomponente (500, 600) die Ausgangsspannung (Ua) der potenzialgetrennten Stromversorgungseinrichtung (20) abgegeben wird.

14. Anordnung (10) nach einem der voranstehenden Ansprüche 11-13,
**dadurch gekennzeichnet, dass** die Pulsweitenmodulationseinrichtung (PWM) bei einer Änderung des Arbeitsfrequenzspektrums (AFS) das daraufhin erfolgende Zuschalten, Abschalten oder Umschalten der Lastkomponente (300, 400, 500, 600) derart berücksichtigt, dass sie die Pulsweitenregelung bereits vor der Änderung des Rückkoppelsignals (Srk) in der zu erwartenden Änderungsrichtung gegensteuert.

15. Verfahren zum Betreiben einer potenzialgetrennten Stromversorgungseinrichtung (20), wobei die Ausgangsspannung (Ua) der potenzialgetrennten Stromversorgungseinrichtung (20) mittels einer Pulsweitenmodulationseinrichtung (PWM) durch Pulsweitenmodulation geregelt wird,
**dadurch gekennzeichnet, dass**
- mit einer steuerbaren Takterzeugungseinrichtung (100) für die Pulsweitenmodulationseinrichtung (PWM) ein Taktsignal (fk(t)) erzeugt wird, das ein von der Eingangsseite (ES) der Stromversorgungseinrichtung (20) aus steuerbares Arbeitsfrequenzspektrum (AFS) aufweist, und
- auf der Ausgangsseite (AS) der Stromversorgungseinrichtung (20) das Arbeitsfrequenzspektrum (AFS) der Pulsweitenmodulationseinrichtung (PWM) anhand der Ausgangsspannung (Ua) und/oder des Ausgangsstromes (Ia) der Stromversorgungseinrichtung (20) oder einer mit der Ausgangsspannung (Ua) oder des Ausgangsstromes (Ia) korrelierenden Größe ermittelt und in Abhängigkeit von dem jeweils ermittelten Arbeitsfrequenzspektrum (AFS) mindestens eine Lastkomponente (300, 400, 500, 600) auf der Ausgangsseite (AS) zugeschaltet oder mindestens eine bereits an der Ausgangsseite (AS) angeschlossene Lastkomponente (300, 400, 500, 600) abgeschaltet oder umgeschaltet wird.

## Claims

1. Arrangement (10) with a potential-isolated current supply device (20), of which the regulation of the output voltage (Ua) is based on pulse width modulation and which comprises:
an input side (ES), an output side (AS) which is potential-isolated from the input side (ES), an input to apply an input voltage (Ue) on the input side (ES), an output which is potential-isolated from the input for outputting a regulated output voltage (Ua) on the output side (AS) and a pulse width modulation device (PWM) on the input side (ES) of the current supply device (20),
**characterised in that**
- the arrangement (10) on the input side (ES) has a controllable clock generation device (100) which is associated with the pulse width modulation device (PWM), and which serves to generate a clock signal (fk(t)) for the pulse width modulation device (PWM) and the clock signal (fk(t)) of which has a working frequency spectrum (AFS) which can be controlled from the input side (ES), and
- the arrangement (10) on the output side (AS) has a working frequency evaluation unit (200) which determines the working frequency spectrum (AFS) of the pulse width modulation device (PWM) on the basis of the output voltage (Ua) and/or output current (Ia) of the current supply device (20) or of a variable correlating with the output voltage (Ua) or the output current (Ia) and, as a function of the respectively determined working frequency spectrum (AFS), activates at least one load component (300, 400, 500, 600) on the output side (AS) or deactivates or commutates at least one load component (300, 400, 500, 600) already connected on the output side (AS).

2. Arrangement (10) according to claim 1,
**characterised in that**
- the controllable clock generation device (100) is configured such that it generates the working frequency spectrum (AFS) as a function of at least one measured variable (M) characterising the operating range and/or efficiency of the current supply device (20) and
- the working frequency evaluation unit (200) is configured such that it determines the measured variable (M) on the basis of the working frequency spectrum (AFS) on the output side (AS) and improves the operating range and/or efficiency by, as a function of the measured variable (M), activating the at least one load component (300, 400, 500, 600) or deactivating or commutating the at least one already connected load component (300, 400, 500, 600).

3. Arrangement (10) according to claim 2,
**characterised in that**
the at least one measured variable (M) characterising the operating range and/or efficiency of the current supply device (20) is a measured variable (M) indicating the input voltage (Ue) on the input side (ES), a measured variable (M) indicating the input current (Ie) on the input side (ES) or a measured variable (M) indicating the temperature (T) on the input side (ES).

4. Arrangement (10) according to one of the preceding claims,
**characterised in that**
the working frequency evaluation unit (200) is configured such that it activates a load component (300, 400) consuming active power when the measured variable (M) indicates a power consumption of the current supply device (20) which falls below a predefined minimum value.

5. Arrangement (10) according to claim 4,
**characterised in that**
a heater is activated or deactivated as a load component (300) .

6. Arrangement (10) according to one of the preceding claims,
**characterised in that**
an energy store (400) for intermediate energy storage is activated or deactivated as a load component.

7. Arrangement (10) according to one of the preceding claims,
**characterised in that**
a synchronous rectifier (600) is commutated as a load component, by being commutated from its synchronous rectifier operation to a passive diode operation or conversely from its passive diode operation to synchronous rectifier operation.

8. Arrangement (10) according to one of the preceding claims,
**characterised in that**
a filter device (500) is activated, deactivated or commutated as a load component.

9. Arrangement (10) according to one of the preceding claims,
**characterised in that**
the controllable clock generation device (100) has:
- at least one control input (S100) for inputting at least one item of information to be transferred from the input side (ES) to the output side (AS), a conversion device (110) for converting the item or items of information present on the input side into a corresponding working frequency spectrum (AFS) for the clock signal (fk(t)) and
- a clock generator (120) for generating a clock signal (fk(t)) that has the working frequency spectrum (AFS) determined by the conversion device (110).

10. Arrangement (10) according to one of the preceding claims,
**characterised in that**
the working frequency evaluation unit (200) has:
- a decoding device (210) which evaluates the working frequency spectrum (AFS) of the pulse width modulation device (PWM) and determines the at least one measured variable (M) characterising the operating range and/or efficiency of the current supply device (20) and/or determines the information, and
- a control device (220) which is associated with the decoding device (210) and which, as a function of the measured variable (M) determined by the decoding device (210) and/or the information, activates the at least one load component (300, 400, 500, 600) or deactivates or commutates the at least one already connected load component (300, 400, 500, 600).

11. Arrangement (10) according to one of the preceding claims,
**characterised in that**
- the arrangement (10) has a feedback path (RKP) which transmits a feedback signal (Srk) from the output side (AS) to the input side (ES) and to the pulse width modulation device (PWM),
- the pulse width modulation device (PWM) is configured such that in the course of the pulse width regulation it regulates the respective pulse width on the basis of the feedback signal (Srk) and
- the load component (300, 400, 500, 600) is independent of the feedback path (RKP) and forms a component which is separate from the feedback path (RKP) and does not affect the feedback path (RKP).

12. Arrangement (10) according to one of the preceding claims,
**characterised in that**
- the output voltage (Ua) of the potential-isolated current supply device (20) is applied to the load component (300, 400) .

13. Arrangement (10) according to one of the preceding claims,
**characterised in that**
- the output voltage (Ua) of the potential-isolated current supply device (20) is generated downstream of the load component (500, 600).

14. Arrangement (10) according to one of the preceding claims 11-13,
**characterised in that**
in the event of a change in the working frequency spectrum (AFS) the pulse width modulation device (PWM) takes account of the subsequent activation, deactivation or commutation of the load component (300, 400, 500, 600) such that it reverses the pulse width regulation in the direction of change to be expected even before the feedback signal (Srk) changes.

15. Method for operating a potential-isolated current supply device (20), wherein the output voltage (Ua) of the potential-isolated current supply device (20) is regulated by pulse width regulation by means of a pulse width modulation device (PWM),
**characterised in that**
- a clock signal (fk(t)) for the pulse width modulation device (PWM) is generated using a controllable clock generation device (100), and has a working frequency spectrum (AFS) that can be controlled from the input side (ES) of the current supply device (20), and
- on the output side (AS) of the current supply device (20) the working frequency spectrum (AFS) of the pulse width modulation device (PWM) is determined on the basis of the output voltage (Ua) and/or of the output current (Ia) of the current supply device (20) or of a variable correlating with the output voltage (Ua) or the output current (Ia) and as a function of the respectively determined working frequency spectrum (AFS) at least one load component (300, 400, 500, 600) is activated on the output side (AS) or at least one load component (300, 400, 500, 600) already connected on the output side (AS) is deactivated or commutated.

## Revendications

1. Montage (10), comprenant un dispositif (20) d'alimentation en courant à séparation de potentiel, dont la régulation de la tension (Ua) de sortie repose sur une modulation d'impulsion en largeur et qui a : un côté (ES) d'entrée, un côté (AS) de sortie, séparé en potentiel du côté (ES) d'entrée, une entrée d'application d'une tension (Ue) d'entrée au côté (ES) d'entrée, une sortie, séparée en potentiel de l'entrée, pour sortir une tension (Ua) de sortie régulée du côté (AS) de sortie et un dispositif (PWM) de modulation d'impulsion en largeur du côté (ES) d'entrée du dispositif (20) d'alimentation en courant,
**caractérisé en ce que**
- le montage (10) a, du côté (ES) d'entrée, un dispositif (100) de production de cadence, qui peut être commandé, qui est en liaison avec le dispositif (PWM) de modulation d'impulsion en largeur, qui sert à produire un signal (fk(t)) d'horloge pour le dispositif (PWM) de modulation d'impulsion en largeur et dont le signal (fk(t) d'horloge a un spectre (AFS) de fréquence de travail pouvant être commandé par le côté (ES) d'entrée et
- le montage a, du côté (AS) de sortie, une unité (200) d'exploitation de fréquence de travail, qui détermine le spectre (AFS) de fréquence de travail du dispositif (PWM) de modulation d'impulsion en largeur à l'aide de la tension (Ua) de sortie et/ou du courant (Ia) de sortie du dispositif (20) d'alimentation en courant ou d'une grandeur correspondant à la tension (Ua) de sortie ou au courant (Ia) de sortie et, en fonction du spectre (AFS) de fréquence de travail déterminé respectivement, branche au moins un composant (300, 400, 500, 600) de charge sur le côté (AS) de sortie ou débranche ou commute au moins un composant (300, 400, 500, 600) de charge raccordé déjà au côté (AS) de sortie.

2. Montage (10) suivant la revendication 1,
**caractérisé en ce que**
- le dispositif (100) de production de cadence, qui peut être commandé, est conformé de manière à produire le spectre (AFS) de fréquence de travail en fonction d'au moins une grandeur (M) de mesure caractérisant la plage de travail et/ou le rendement du dispositif (20) d'alimentation en courant et
- l'unité (200) d'exploitation de fréquence de travail est conformée de manière à déterminer la grandeur (M) de mesure à l'aide du spectre (AFS) de fréquence de travail du côté (AS) de sortie et à améliorer la plage de travail et/ou à augmenter le rendement en branchant, en fonction de la grandeur (M) de mesure, le au moins un composant (300, 400, 500, 600) de charge ou en débranchant ou en commutant le au moins un composant (300, 400, 500, 600) de charge déjà raccordé.

3. Montage (10) suivant la revendication 2,
**caractérisé en ce que**
la au moins une grandeur (M) de mesure, caractérisant la plage de travail et/ou le rendement du dispositif (20) d'alimentation en courant, est une grandeur (M) de mesure indiquant la tension (Ue) d'entrée du côté (ES) d'entrée, une grandeur (M) de mesure indiquant le courant (Ie) d'entrée du côté (ES) d'entrée ou une grandeur (M) de mesure indiquant la température (T) du côté (ES) d'entrée.

4. Montage (10) suivant l'une des revendications précédentes,
**caractérisé en ce que**
l'unité (200) d'exploitation de fréquence de travail est conformée de manière à brancher un composant (300, 400) de charge, consommant de la puissance active, si la grandeur (M) de mesure indique une absorption de puissance, inférieure à une valeur minimum donnée à l'avance, du dispositif (20) d'alimentation en courant.

5. Montage (10) suivant la revendication 4,
**caractérisé en ce qu'**
un chauffage est branché ou débranché comme composant (300) de charge.

6. Montage (10) suivant l'une des revendications précédentes,
**caractérisé en ce qu'**
un accumulateur (400) d'énergie, pour une accumulation intermédiaire d'énergie, est branché ou débranché comme composant de charge.

7. Montage (10) suivant l'une des revendications précédentes,
**caractérisé en ce qu'**
un redresseur (600) synchrone est commuté comme composant de charge, en faisant passer celui-ci de son fonctionnement en redresseur synchrone à un fonctionnement passif en diode ou, inversement, de son fonctionnement passif en diode au fonctionnement en redresseur synchrone.

8. Montage (10) suivant l'une des revendications précédentes,
**caractérisé en ce qu'**
un dispositif (500) de filtre est branché, débranché ou commuté comme composant de charge.

9. Montage (10) suivant l'une des revendications précédentes,
**caractérisé en ce que**
le dispositif (100) de production de cadence, qui peut être commandé, a :
- au moins une entrée (S100) de commande pour l'entrée d'au moins une information à transmettre du côté (ES) d'entrée au côté (AS) de sortie, un dispositif (110) de transformation, pour transformer l'information ou les informations, appliquée du côté d'entrée, en un spectre (AFS) de fréquence de travail correspondant pour le signal (fk(t)) d'horloge et
- un générateur (120) de cadence pour produire un signal (fk(t)) d'horloge, qui a le spectre (AFS) de fréquence de travail déterminé par le dispositif (110) de transformation.

10. Montage (10) suivant l'une des revendications précédentes,
**caractérisé en ce que**
l'unité (200) d'exploitation de fréquence de travail a :
- un dispositif (210) de décodage, qui exploite le spectre (AFS) de fréquence de travail du dispositif (PWM) de modulation d'impulsion en largeur et qui détermine au moins une grandeur (M) de mesure caractérisant la plage de travail et/ou le rendement du dispositif (20) d'alimentation en courant et/ou l'information et
- un dispositif (220) de commande en liaison avec le dispositif (210) de décodage, qui, en fonction de la grandeur (M) de mesure déterminée par le dispositif (210) de décodage et/ou de l'information, branche le au moins un composant (300, 400, 500, 600) de charge ou débranche ou commute le au moins un composant (300, 400, 500, 600) de charge déjà raccordé.

11. Montage (10) suivant l'une des revendications précédentes,
**caractérisé en ce que**
- le montage (10) a un trajet (RKP) de réaction, qui transmet un signal (Srk) de réaction, du côté (AS) de sortie au côté (ES) d'entrée et vers le dispositif (PWM) de modulation d'impulsion en largeur,
- le dispositif (PWM) de modulation d'impulsion en largeur est conformé de manière à réguler, à l'aide du signal (Srk) de réaction, la largeur d'impulsion respective dans le cadre de la régulation d'impulsion en largeur et
- le composant (300, 400, 500, 600) de charge est indépendant du trajet (RKP) de réaction et forme un composant distinct du trajet (RKP) de réaction et n'influençant pas le trajet (RKP) de réaction.

12. Montage (10) suivant l'une des revendications précédentes,
**caractérisé en ce que**
- il est appliqué au composant (300, 400) de charge la tension (Ua) de sortie du dispositif (20) d'alimentation en courant à séparation de potentiel.

13. Montage (10) suivant l'une des revendications précédentes,
**caractérisé en ce que**
- après le composant (500,600) de charge, la tension (Ua) de sortie du dispositif (20) d'alimentation en courant à séparation de potentiel est cédée.

14. Montage (10) suivant l'une des revendications précédentes 11 à 13,
**caractérisé en ce que**
le dispositif (PWM) de modulation d'impulsion en largeur prend en compte, s'il se produit une modification du spectre (AFS) de fréquence de travail, le branchement, le débranchement ou la commutation s'effectuant ensuite du composant (300, 400, 500, 600) de charge de manière à commander la régulation d'impulsion en largeur dans le sens opposé au sens de modification escompté dès avant la modification du signal (Srk) de réaction.

15. Procédé pour faire fonctionner un dispositif (20) d'alimentation en courant à séparation de potentiel, dans lequel on régule, par modulation d'impulsion en largeur, la tension (Ua) de sortie du dispositif (20) d'alimentation en courant à séparation de potentiel au moyen d'un dispositif (PWM) de modulation d'impulsion en largeur,
**caractérisé en ce que**
- on produit, par un dispositif (100) de production de cadence, qui peut être commandé, pour le dispositif (PWM) de modulation d'impulsion en largeur, un signal (fk(t)) d'horloge, qui a un spectre (AFS) de fréquence de travail pouvant être commandé par le côté (ES) d'entrée du dispositif (20) d'alimentation en courant et
- du côté (AS) de sortie du dispositif (20) d'alimentation en courant, on détermine le spectre (AFS) de fréquence de travail du dispositif (PWM) de modulation d'impulsion en largeur, à l'aide de la tension (Ua) de sortie et/ou du courant (Ia) de sortie du dispositif (20) d'alimentation en courant ou d'une grandeur correspondant à la tension (Ua) de sortie et/ou au courant (Ia) de sortie et, en fonction du spectre (AFS) de fréquence de travail déterminé respectivement, on branche au moins un composant (300, 400, 500, 600) de charge du côté (AS) de sortie ou on débranche ou on commute au moins un composant (300, 400, 500, 600) de charge déjà raccordé du côté (AS) de sortie.
